# EUROPEAN PATENT APPLICATION

(11) **EP 0 625 324 A2**
(43) Date of publication of application: **23.11.1994**
(21) Application number: 94303273.0
(22) Date of filing: 06.05.1994
(51) Int. Cl.: A47J 27/06

(54) **Steam cooking utensil**

(30) Priority: 17.05.1993 US 62094
(71) Applicant: Black & Decker Inc., Newark Delaware 19711 (US)
(72) Inventor: Naft, Stuart, Fairfield, Connecticut 06430 (US)
(74) Representative: Stagg, Diana Christine

(57) **Abstract**

A steam cooking utensil (10) includes a base (12) and a boiling liquid reservoir (16) defined by the base. A heater (18) is mounted in the base (12) to heat liquid in the boiling liquid reservoir (16). A cooking bowl (26) is supported by the base (12) and includes a food support surface (28) having a plurality of vent holes (42). An adjustable and removable divider basket (46) is mounted in the cooking bowl (26) and includes a food support surface (54, 55) aligned with the food support surface (28) of the cooking bowl. The food support surface (54, 55) of the divider basket (46) includes a plurality of vent holes (56) to allow steam formed in the boiling liquid reservoir to enter into the divider basket. The divider basket comprises first (46A) and second (46B) sections movably connected (47, 51) to each other to enable the user to adjust the effective cooking area of the cooking bowl (26) and the divider basket (46). The divider basket (46) includes handle means (34) to enable the user to remove the basket (46) from the bowl (26).

## Description

This invention relates to a steam cooking utensil and, in particular, to a divider basket for such a utensil 5 which can be used to partition the cooking bowl thereof so that different foods may be steamed simultaneously.

The use of steam cooking utensils has grown in popularity in recent years due to a general health consciousness of the population. Foods cooked in steamers tend to maintain their nutrients.

United States Patent No.5,097,753 relates to a steam cooking utensil including a cooking bowl having a food support tray. In actual use, the steam cooking utensil disclosed can generally only be used to steam one type of food at any given time. It has been found that users of the steam cooking utensil sometimes desire simultaneously to steam more than one type of food. Additionally, there may be times when in steaming two types of food, one of the types of food should be steamed for a relatively short period of time and the other type of food should be steamed for a relatively long period of time. In such instances, it is desirable that the food that is steamed for a relatively short period of time should be easily and readily removable from the steam cooking utensil.

It is an object of the present invention to provide a steam cooking utensil having a removable and adjustable divider basket that can be mounted within the cooking bowl so that two foods of different types and/or sizes may be simultaneously steamed.

The present invention therefore provides a steam cooking utensil comprises a base; a boiling liquid reservoir defined by the base; a heater mounted in the base to heat liquid contained in the boiling liquid reservoir and, a cooking bowl supported by the base and including a bottom tray defining a first food support surface, the food support surface including a plurality of vent holes to allow steam generated in the reservoir to flow into the cooking bowl, characterised in that an adjustable and removable divider basket mounted within the cooking bowl and supported thereby comprises a first section and a second section rotatably attached to the first section, the first section including a second food support surface overlying the first food support surface of the cooking bowl and the wall means extending vertically upward from the second food support surface, the wall means extending about a portion of the periphery of the second food support surface to provide an open end on the surface, the wall means forming a portion of the outer wall of the basket, the second section including a third food support surface overlying the first food support surface of the cooking bowl, the third food support surface including wall means extending vertically upward about a portion of the periphery thereof to provide an open end on the third support surface, the open end on the third support surface substantially abutting the open end on the second support surface when the first and second sections are in a first food receiving position, pivot means joining the first and second sections of the divider basket for permitting relative movement between the first and second sections to vary the effective area of the second and third food support surfaces, and handle means associated with at least one of the sections to allow the user readily to remove the divider basket from the cooking bowl.

An embodiment of a steam cooking utensil will now be further described with reference to the accompanying drawings, in which:-
Figure 1 is an elevational sectional view of a steam cooking utensil including the divider basket of the present invention;
Figure 2 is an exploded perspective view of the divider basket when viewed from the rear;
Figure 3 is an exploded perspective view of one section of the divider basket when taken from the front;
Figure 4 is an exploded perspective view of a second section of the divider basket taken from the right side thereof;
Figure 5 is an assembled perspective view of the divider basket illustrated in Figures 2 to 4;
Figure 6 is a front elevational view of the divider basket, and
Figure 7 is a top plan view of the divider basket.

Referring now to the various figures of the drawing, a preferred embodiment of the present invention shall be described in detail. In referring to the several figures of the drawing, like numerals shall refer to like parts.

A steam cooking utensil (10) includes a base member (12) having a wall (17) defining a boiling liquid reservoir (16). A heating element (18) is mounted in reservoir (16) to provide heat to the liquid, such as water, to transform the water into steam. The heating element (18) is preferably centrally mounted within the reservoir (16). The base (12) may also include an "on/off" switch (not shown) for selectively connecting the utensil to a source of electrical power. The wall (17) includes a pair of annularly spaced support feet (19) (only one of which is shown) and a support pad (15).

The utensil (10) further includes a ring-like member (20), supported by base (12), which includes an annular outer wall (21) concentrically positioned about and spaced from an annular inner wall (25). The wall (25) defines an opening (24) aligned with the heater element (18). The bottom of the ring-like member (20) is defined by an imperforate plate (22) and is supported on the pad (15) and the feet (19) of the base (12).

The utensil (10) also includes a cooking bowl (26) which is also supported by base (12), and which includes an axially extending outer wall (35) which defines a food cooking space. The lower end of bowl (26) is closed by food support tray (28). The bowl (26) includes a pair of radially outwardly extending ears (30); each ear includes a slot (74). The bowl (26) further includes an axially extending wall (31) which is radially offset inwardly relative to the wall (35) to define a horizontally extending flange-like surface (33). The surface (33) is supported on the top surface of the wall (17) of the base (12).

The utensil (10) also includes a lid (62), which includes a plurality of openings (64) formed in the top surface (66) thereof. The openings (64) function as steam vents. The lid (62) further includes a pair of radially extending ears (67), each ear having an axially extending finger (68). The fingers (68) conform to the configuration of slots (74) of the bowl (26) to join the lid (62) snugly to the bowl. Each opening (64) is defined by axially extending wall means (70).

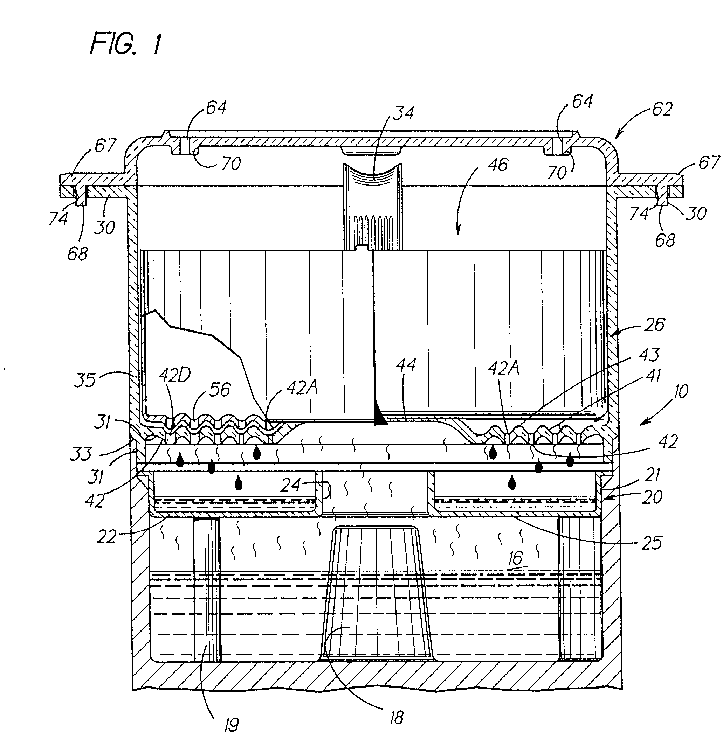

The tray (28) includes an imperforate surface (44) aligned with opening (24) in the member (20) and with the heater (18) mounted in the base (12). A perforated food support surface (43) extends radially outward from the imperforate surface (44). The food support surface (43) is defined by a plurality of alternating hill-like ridges (41) and valley-like channels (40) extending radially outward in concentrically spaced rings. The surface (43) also includes a plurality of flow openings or holes (42) for enabling steam generated in the reservoir to flow into the cooking space (36). Preferably, as illustrated in Figure 1, the diameter of flow holes in one concentric ring increase in a radially outward direction relative to the imperforate surface (44). Thus, flow holes (42A) have the smallest diameter and flow holes (42D) have the largest diameter. A more detailed description of the steam cooking utensil (10) may be found in previously cited United States Patent No. 5,097,753.

It has been determined that some users of the steam cooking utensil (10) desire to steam two foods simultaneously. It has also been determined that the two foods may have different steaming time periods and further, the two different foods may not be of the same size so that each food will require a different portion of the total capacity of cooking bowl (26).

To enable the user to simultaneously cook two different foods having different steaming time periods, an adjustable divider basket (46) has been provided in the steam cooking utensil (10). The divider basket (46) includes a first section (46A) and a second section (46B). The section (46A) has a food support surface (54) and the section (46B) has a food support surface (55). Each of the food support surfaces (54, 55) includes a plurality of oblong shaped openings (56) extending radially outwardly from an imperforate surface (57) to the outer wall (32) in concentrically spaced rings. The area of each opening (56) in one concentric ring increases in a radially outward direction relative to the surface (57).

As illustrated in Figure 1, the openings (56) are vertically aligned with the openings (42). This allows steam to flow into the divider basket (46) from the bowl (26).

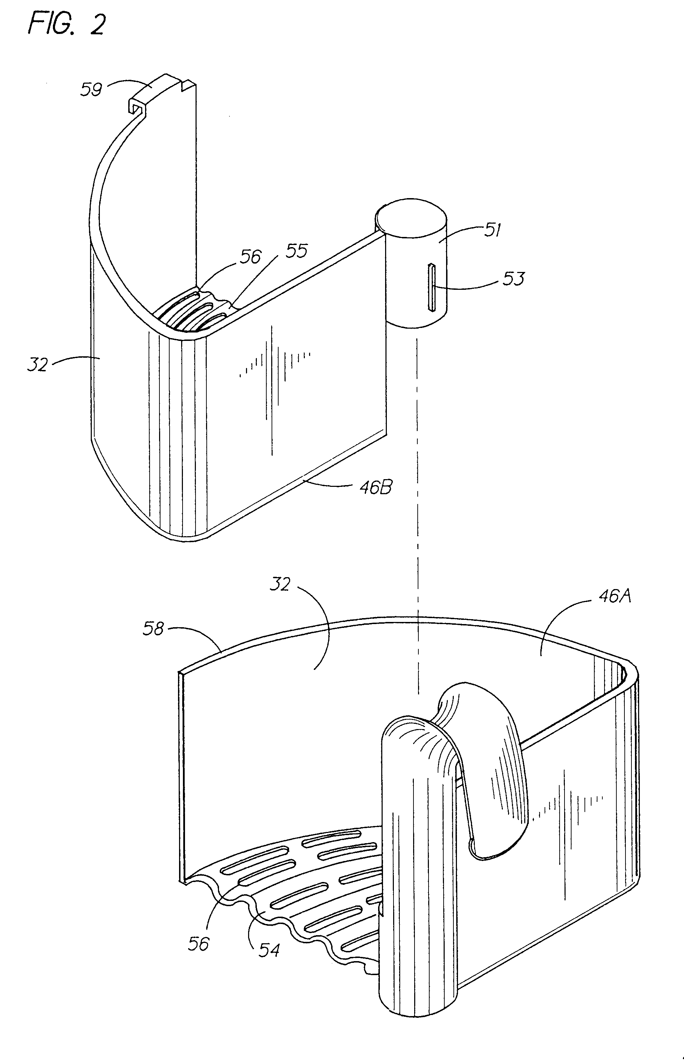

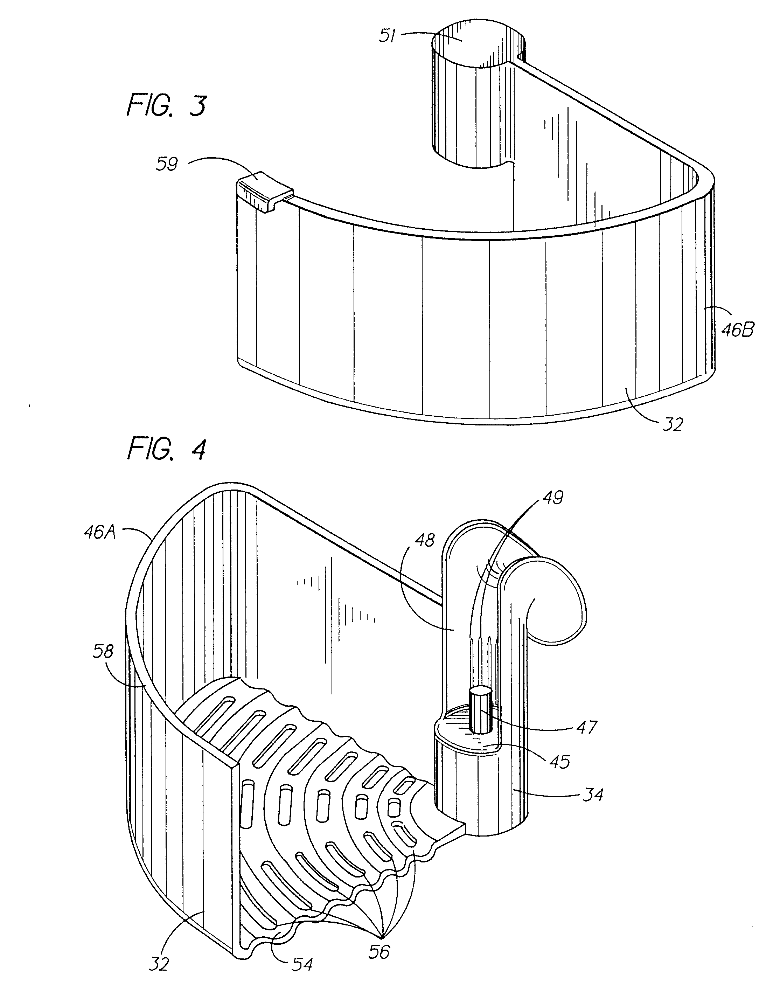

Each section (46A and 46B) includes the wall (32) extending vertically upward from an edge of the food support surface (54). The wall (32) is arcuate in shape and conforms to the shape of the inner surface of the wall (35). The wall (32) defines the periphery of the adjustable divider basket (46). As illustrated, the wall (32) of each of the sections (46A and 46B) extends only about a portion of the periphery of the food support surface 54 so that one edge of the surface remains open ended as shown in Figures 2 to 4.

It is desirable that divider basket (46) be adjustable to accommodate foods of different sizes. The basket should also be readily removable from the cooking bowl (26) by the user. By making the basket (46) adjustable, it will accommodate different sizes of food and it will also allow different sizes of food to be cooked effectively within the cooking bowl when the basket is used. In effect, by adjusting the basket (46), the effective cooking area of the bowl (26) and the basket (46) will be simultaneously adjusted.

To obtain the removability feature of the basket (46), one of the sections, for example section (46A) includes handle means (34). In the preferred embodiment the handle means (34) extends upwardly from the surface (57). The handle means (34) includes a generally U-shaped surface (48) facing towards the support surface (54). The surface (48) includes a plurality of vertically extending horizontally spaced notches (49) for a reason to be more fully explained hereinafter.

The shaft (47) extends upwardly from a horizontal wall (45) of handle (34), and functions as a pivot for pivotally joining sections 46A and 46B.

The section (46B) includes a member (51) which has a vertically extending bore for receiving the shaft (47). When the member (51) is placed over the shaft (47) sections (46A and 46B) are connected for relative movement.

As shown in Figure 2, the member (51) includes a vertically extending rib (53). The rib (53) is designed to function so that it selectively engages one of the notches (49) formed in the surface (48) so that section (46B) can be retained in a desired position relative to section (46A) to provide the desired effective food steaming area within the walls forming the adjustable food basket (46).

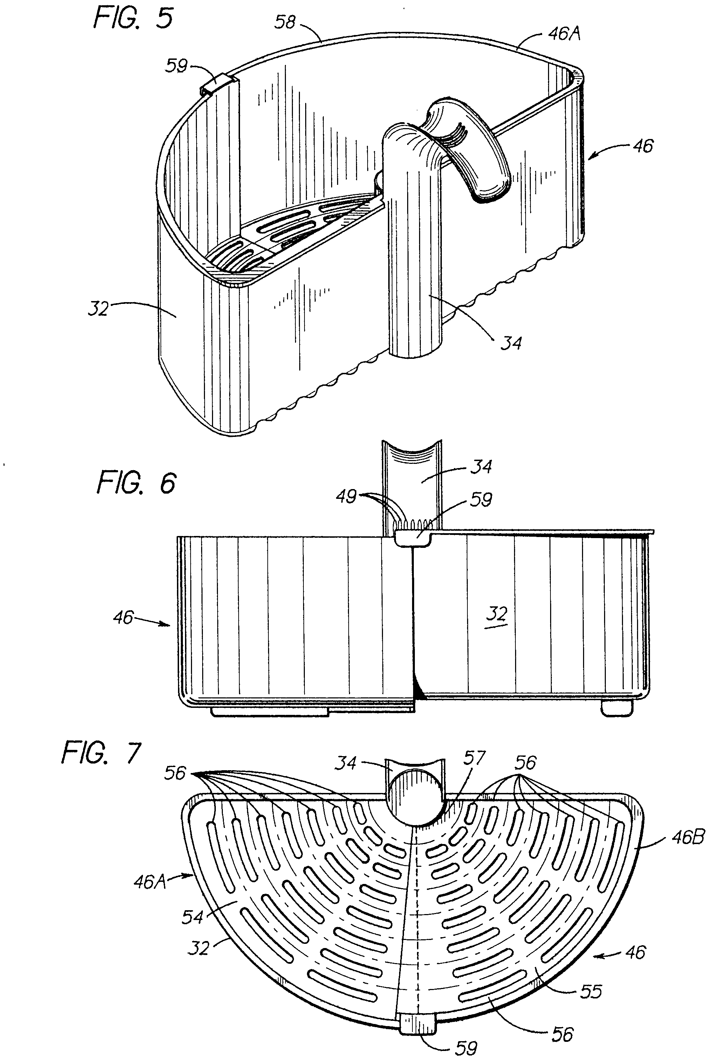

The section (46B) also includes food support surface (55) having the wall (32) extending vertically therefrom about a portion of the periphery thereof. As the wall (32) only extends about a portion of the periphery of the support surface (55), the support surface (55) includes an open end as shown in Figure 2. As shown in Figure 7, when sections 46A and 46B are joined together, the open ends of the support surfaces (54 and 55) are in generally abutting relationship so that a continuous food support surface is provided.

One of the sections, for example (46B), includes means (59) forming a track. The top surface (58) of the wall (32) of section 46A is guided within the track.

In using the divider basket (46), the user initially adjusts sections 46A and 46B so that the effective area of the food support surfaces (54, 55) accommodates the size of the food to be steamed within the basket. As illustrated in Figures 5 and 7, even when section 46B is rotated relative to section 46A so that the effective area of each of the support surfaces (54, 55) are at the maximum, the wall (32) of section 46B is in slight overlapping relationship with the wall (32) of section 46A and the support surface (55) is in overlapping relationship with the surface (54). The slight overlapping relationships of the walls and the support surfaces effectively provide a seal to maintain the food within the basket (46) . If less food is required to be placed within the basket and more food placed in the cooking bowl, section 46A is moved relative to section 46B to reduce the effective area of each of the support surfaces (54, 55).

If the user has placed food within the cooking basket (46) that is steamed in a shorter period of time than the food placed in the cooking bowl (26), the user can readily lift the divider basket (46) from the cooking bowl (26) through the use of the handle (34). The detent formed by the rib (53) and the notches (49) retain sections 46A and 46B of the divider basket (46) in position relative to each other.

## Claims

1. A steam cooking utensil (10) comprises:
a base (12);
a boiling liquid reservoir (16) defined by the base (12);
a heater (18) mounted in the base (12) to heat liquid contained in the boiling liquid reservoir (16) and
a cooking bowl (26) supported by the base (12) and including a bottom tray (28) defining a first food support surface (28), the food support surface including a plurality of vent holes (42) to allow steam generated in the reservoir (16) to flow into the cooking bowl (26),
characterised in that
an adjustable and removable divider basket (46) mounted within the cooking bowl (26) and supported thereby comprises a first section (46A) and a second section (46B) rotatably attached (47,51) to the first section, the first section (46A) including a second food support surface (54) overlying the first food support surface (28) of the cooking bowl (26) and the wall means (32) extending vertically upward from the second food support surface (54), the wall means (32) extending about a portion of the periphery of the second food support surface (54) to provide an open end on the surface, the wall means (32) forming a portion of the outer wall of the basket (46), the second section (46B) including a third food support surface (55) overlying the first food support surface (28) of the cooking bowl (26), the third food support surface (55) including wall means (32) extending vertically upward about a portion of the periphery thereof to provide an open end on the third support surface (55), the open end on the third support surface (55) substantially abutting the open end on the second support surface (54) when the first and second sections (46A, 46B) are in a first food receiving position, pivot means (47) joining the first (46A) and second (46B) sections of the divider basket (46) for permitting relative movement between the first (46A) and second (46B) sections to very the effective area of the second (54) and third (55) food support surfaces, and handle means (34) associated with at least one of the sections to allow the user readily to remove the divider basket (46) from the cooking bowl (26).

2. A steam cooking utensil (10) according to Claim 1 characterised in that the means for permitting relative movement between the first and second sections includes vertically extending shaft means (47) extending upwardly above the food support surface (54) of one of the sections (46A) and a member (51) having a vertically extending bore attached to the other of the sections (46B) for receiving the shaft (47) to join pivotally the first and second sections.

3. A steam cooking utensil according to Claim 1 or Claim 2 characterised in that it includes detent means (49,53) for retaining the first section (46A) of the divider basket in a selected position relative to the second section (46B).

4. A steam cooking utensil according to Claim 3 characterised in that the detent means includes a rib (53) extending from an outer surface of the member (51), the handle means (34) including a generally U-shaped vertically extending surface (48) in which the member (51) is pivotally positioned, the U-shaped surface (48) of the handle means (34) including a plurality of horizontally spaced vertically extending notches (49), the rib (53) of the member (51) being retained in a selected one of the notches for retaining the first section (46A) in a selected pivotal position relative to the second section (46B).

5. An adjustable and removable divider basket (46) for a steam cooking utensil (10) characterised in that it comprises
a first section (46A) and a second section (46B) rotatably attached to the first section (46A), said first section including a first food support surface (54) and wall means (32) extending vertically upward from the food support surface (54), the wall means (32) extending about a portion of the periphery of the food support surface (54) to provide an open end on the surface, the wall means forming a portion of the outer wall of the basket, the second section (46B) including a second food support surface (55), the second food support surface including wall means (32) extending vertically upward about a portion of the periphery thereof to provide an open end on the second support surface (55), the open end on the second support surface (55) substantially abutting the open end on the first support surface (54) when the first and second sections are in a first food receiving position and pivot means (49,53) joining said first (46A) and second (46B) sections of the divider basket (46) for permitting relative movement between said first and second sections to very the effective area of the first and second food support surfaces.

6. An adjustable and removable divider basket according to Claim 5 characterised in that the means for permitting relative movement between the first and second sections includes vertically extending shaft means (47) extending upwardly above the food support surface of one of the sections (46A) and a member (51) having a vertically extending bore attached to the other of said sections for receiving the shaft (47) to join pivotally the first (46A) and second (46B) sections.

7. An adjustable and removable divider basket according to Claim 5 or Claim 6 characterised in that at least one of the sections (46A, 46B) of the divider basket (46) includes handle means (34) for enabling the user to lift the divider basket.

8. An adjustable and removable divider basket according to any of Claims 5, 6 or 7 including detent means (49,53) for retaining the first section (46A) of the divider basket (46) in a selected position relative to the second section (46B).

9. An adjustable and removable divider basket in accordance with Claim 8 wherein the detent means includes a rib (53) extending from an outer surface of the member (51), the handle means including a generally U-shaped vertically extending surface (48) in which the member (51) is pivotally positioned, the U-shaped surface of the handle means including a plurality of horizontally spaced, vertically extending notches (49), the rib (53) of the member (51) being retained in a selected one of the notches (49) for retaining the first section (46A) in a selected pivotal position relative to the second section (46B).
